# EUROPÄISCHE PATENTSCHRIFT

(11) **EP 1 780 846 B1**
(45) Veröffentlichungstag und Bekanntmachung des Hinweises auf die Patenterteilung: **18.03.2009**
(21) Anmeldenummer: 06122349.1
(22) Anmeldetag: 16.10.2006
(51) Int. Cl.: H01R 43/048

(54) **Messkopf und Verfahren zur Bestimmung der Crimphöhe eines Leitercrimps**
Measuring head and method for determination of crimp height of a conductor
Tête de mesure et procédé de détermination de hauteur de sertissage d'un conducteur

(30) Priorität: 27.10.2005 EP 05110077
(43) Veröffentlichungstag der Anmeldung: 02.05.2007
(73) Patentinhaber: Komax Holding AG, 6036 Dierikon (CH)
(72) Erfinder: Conte, Alois, 6030, Ebikon (CH)
(74) Vertreter: Gaussmann, Andreas

(56) Entgegenhaltungen:
- EP-A- 0 964 485
- EP-A2- 1 515 410

## Beschreibung

Die Erfindung betrifft einen Messkopf und ein Verfahren zur Bestimmung der Crimphöhe eines Leitercrimps bestehend aus einem ersten Teil und aus einem zweiten Teil und bestehend aus einem die Teile antreibenden ersten Antrieb, wobei der erste Teil und der zweite Teil zur Bestimmung der Crimphöhe eines Leitercrimps gegenläufig linear bewegbar sind gemäss der Definition der unabhängigen Patentansprüche.

Aus dem Stand der Technik EP 0 964 485 A1 ist eine Vorrichtung zur Messung der Crimphöhe eines Leitercrimps bekannt. Die Vorrichtung umfasst dazu einen beweglichen Mess- und Rammbär mit einer Messspitze sowie einen Amboss, zwischen die ein Crimpabschnitt geklemmt wird, um die Crimphöhe zu messen. Der Mess- und Rammbär weist zwei drehbare Zentrierbacken auf, um den Crimpabschnitt exakt auf der Messspitze zu positionieren.

Aus der Patentschrift EP 0 1 515 410 A2 ist eine Kabelbearbeitungsmaschine mit einem Messerkopf bekannt geworden. Der Messerkopf besteht aus einem Oberteil mit mindestens einem Trennmesser, mindestens einem Abisoliermesser, einer ersten Schneide, einer auf dem Piezo Prinzip arbeitenden Kraftmesseinrichtung und aus einer ersten Halteplatte. Der Unterteil des Messerkopfes besteht aus mindestens einem Trennmesser, mindestens einem Abisoliermesser, einer zweiten Schneide und aus einer zweiten Halteplatte. Erste Schneide, zweite Schneide und Kraftmesseinrichtung dienen der Crimphöhenmessung. Erste Halteplatte und zweite Halteplatte dienen der Auszugskraftmessung.

Bei der bekannten Einrichtung kann die Öffnung der beiden Schneiden mittels Motorpositiongeber bestimmt werden. Die Öffnung entspricht dann auch der Höhe eines Leitercrimps. Die Messung der Crimphöhe mittels zwei Schneiden wird in Fachkreisen nicht als zuverlässig anerkannt, weil bei der Vercrimpung des Leitercrimps seitlich vielfach zwei kleine Gräte entstehen, die durch das nötige Spiel zwischen Crimper (oberes Werkzeug) und Amboss (unteres Werkzeug) entstehen. Die Gräte werden bis zu einem gewissen Grad akzeptiert. Bei der Messung der Crimphöhe mit zwei Schneiden ergeben diese Gräte je nach deren Höhe ein falsches Messresultat, weil die untere Schneide nicht zum eigentlichen Messpunkt an der Unterseite des Leitercrimps gelangen kann.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Einrichtung und Verfahren vorzuschlagen, bei der bzw. bei dem die Messung der Crimphöhe maschinell zuverlässig bestimmbar ist.

Vorteilhafte Weiterbildungen der Erfindung sind in den abhängigen Patentansprüchen angegeben.

Die durch die Erfindung erreichten Vorteile sind im wesentlichen darin zu sehen, dass mit der erfindungsgemässen Messeinrichtung die Höhe des Crimpkontaktes im Bereich des Leitercrimps maschinell messbar ist. Die Messeinrichtung ist unabhängig von der Geometrie der Crimpkontakte. Selbst bei Crimpkontakten mit Kontaktfedern ist die Crimphöhe messbar.

Die erfindungsgemässe Einrichtung erlaubt im gesamten kürzere Bearbeitungszeiten, weil die bisher ausserhalb der Crimpmaschine manuell durchgeführten Messarbeiten entfallen. Zur Crimphöhenmessung ist beispielsweise lediglich eine Kraftmesseinrichtung mit Piezoelementen notwendig, wobei die Crimphöhe aus dem Kraftanstieg an den Piezoelementen und der Position der Schneide und Spitze bestimmbar ist.

Die üblicherweise beim Einrichten und gelegentlich während der Produktion erfassten Messdaten können gespeichert und zur Qualitätssicherung weiterverwendet werden. Die 3-Punkt Crimphöhenmessung erfolgt vollautomatisch für Crimpkontakte mit unterschiedlicher Geometrie ohne manuelle Eingriffe. Die Crimphöhenmessung erfolgt unabhängig von der Aussenkontur des Crimpkontaktes.

Bei der Crimphöhenmessung werden Schneide und Spitze linear zugestellt und kommen mit einem Antrieb aus, wobei der unten angeordnete Antrieb den Zugang zu anderen Modulen der Kabelbearbeitungsmaschine erleichtert. In einer weiteren Ausführungsvariante kann je ein Antrieb für Schneide und Spitze vorgesehen sein.

Bei der erfindungsgemässen Einrichtung ist an einem ersten Teil eines Messkopfes eine erste Schneide und an einem zweiten Teil des Messkopfes eine Spitze angeordnet, wobei bei der Bestimmung der Crimphöhe die erste Schneide die Oberseite des Leitercrimps an zwei Punkten abtastet und die Spitze die Unterseite des Leitercrimps an einem Punkt abtastet.

Anhand der beiliegenden Figuren wird die vorliegende Erfindung näher erläutert.

Es zeigen:
Fig. 1 eine erfindungsgemässe Messeinrichtung mit Messkopf und Antrieb,
Fig. 2 und Fig. 3 eine schematische Darstellung einer maschinellen 3-Punkt Crimphöhenmessung,
Fig. 4 einen Leitercrimp im Querschnitt,
Fig. 5 Einzelheiten eines ersten Teils und eines zweiten Teils des Messkopfes und
Fig. 6 der Messkopf in der Messstellung.

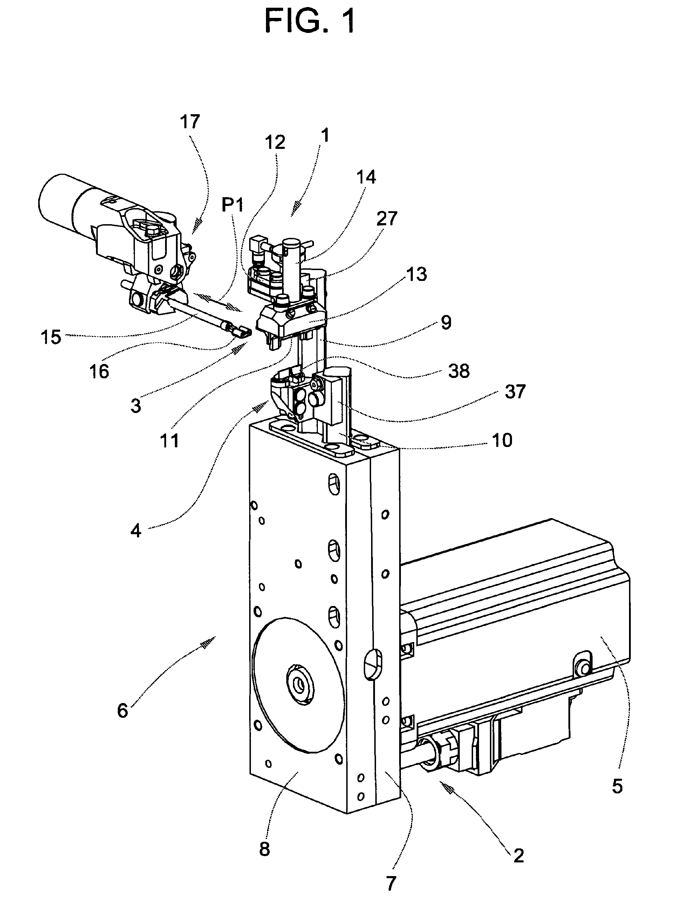

Fig. 1 zeigt den erfindungsgemässen Messkopf 1 mit einem ersten Antrieb 2. Der Messkopf 1 besteht aus einem ersten Teil 3 und aus einem zweitem Teil 4, die linear und gegenläufig bewegbar sind. Der erste Teil 3 wird in der weiteren Beschreibung Oberteil 3 genannt. Der zweite Teil 4 wird in der weiteren Beschreibung Unterteil 4 genannt. Die Linearbewegung wird mittels des ersten Antriebes 2 erzeugt, wobei die Rotationsbewegung eines ersten Motors 5 in eine Linearbewegung des Ober-/Unterteils 3,4 umgesetzt wird. Eine Lineareinheit 6 ist in einem Gehäuse 7,8 untergebracht. Die Rotationsbewegung des Motors 5 wird auf ein Zahnritzel übertragen, das im Eingriff steht mit einer ersten Zahnstange und einer zweiten Zahnstange. Die erste Zahnstange ist Teil eines ersten Auslegers 9, die zweite Zahnstange ist Teil eines zweiten Auslegers 10. Die Zahnstangen bzw. die Ausleger 9,10 werden mittels eines Zahnritzels gegenläufig bewegt. Der erste Ausleger 9 ist mittels einer am Gehäuse 7 angeordneten ersten Linearführung geführt. Der zweite Ausleger 10 ist mittels einer am Gehäuse 7 angeordneten zweiten Linearführung geführt. Der Oberteil 3 des Messkopfes 1 ist mit dem ersten Ausleger 9 verbunden. Der Unterteil 4 des Messkopfes 1 ist mit dem zweiten Ausleger 10 verbunden. Die Position des ersten Auslegers 9 bzw. des zweiten Auslegers 10 wird mittels einer nicht dargestellten Linearmesseinrichtung erfasst. (Beispielsweise mittels einer einen Glasmessstab abtastenden Optik, wobei der Glasmessstab auf dem einen Ausleger und die zugehörige Optik auf dem anderen Ausleger angeordnet ist). Eine auf dem magnetischen oder kapazitiven Prinzip arbeitende Linearmesseinrichtung ist auch möglich).

Der Oberteil 3 des Messkopfes 1 besteht aus einer ersten Schneide 11, einer auf dem Piezo Prinzip arbeitenden Kraftmesseinrichtung 12 und einem einer Zentriereinrichtung 13 zugeordneten zweiten Motor 14. Ein Kabel 15 mit einem angeschlagenen Crimpkontakt 16 ist mittels eines Greifers 17 mindestens in der mit einem ersten Pfeil P1 symbolisierten Richtung bewegbar und zur Bestimmung der Crimphöhe dem Messkopf 1 zuführbar.

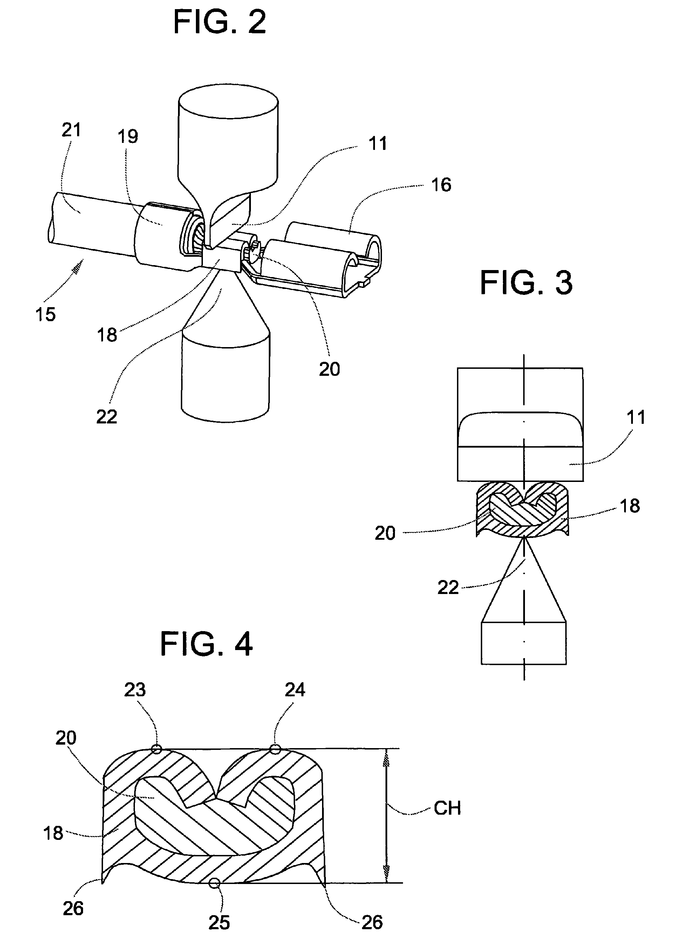

Fig. 2 und Fig. 3 zeigen eine schematische Darstellung einer maschinellen 3-Punkt Crimphöhenmessung. Der am Kabel 15 angeschlagene Crimpkontakt 16 weist einen Leitercrimp 18 und einen Isolationscrimp 19 auf, wobei der Leitercrimp 18 einen Kabelleiter 20 umfasst und der Isolationscrimp 19 eine Kabelisolation 21 umfasst. Leitercrimp 18 und Isolationscrimp 19 werden beim Crimpvorgang plastisch deformiert und mittels Crimpstempel und Crimpamboss in die gezeigte Form gepresst. Die in Verbindung mit dem Oberteil 3 stehende erste Schneide 11 ist in Kontakt mit der Oberseite des Leitercrimps 18. Eine in Verbindung mit dem Unterteil 4 stehende Spitze 22 ist in Kontakt mit der Unterseite des Leitercrimps 18. Die Position der ersten Schneide 11 ist messbar mittels der Linearmesseinrichtung. Die Position der Spitze 22 ist messbar mittels der Linearmesseinrichtung. Die Differenz der beiden Positionen entspricht der in Fig. 4 gezeigten Crimphöhe CH.

Fig. 4 zeigt einen Querschnitt des Leitercrimps 18 mit den für die 3-Punkt Crimphöhenmessung relevanten Kontaktpunkten. An der Oberseite des Leitercrimps 18 steht die erste Schneide 11 an einem ersten Punkt 23 und an einem zweiten Punkt 24 in Verbindung mit dem Leitercrimp 18. An der Unterseite des Leitercrimps 18 steht die Spitze 22 an einem dritten Punkt 25 in Verbindung mit dem Leitercrimp 18. Mit 26 sind Gräte bezeichnet, die beim Crimpvorgang durch das nötige Spiel zwischen Crimpstempel und Crimpamboss an der Unterseite des Leitercrimps 18 entstehen. Die Bestimmung der Crimphöhe mittels einer ersten Schneide und einer zweiten Schneide, wie im eingangs zitierten Stand der Technik vorgeschlagen, würde durch die Gräte 26 verfälscht. Die Crimphöhe CH ergibt sich aus dem Abstand der durch den ersten Punkt 23 und zweiten Punkt 24 definierten Oberseite von der durch den dritten Punkt 25 definierten Unterseite des Leitercrimps 18.

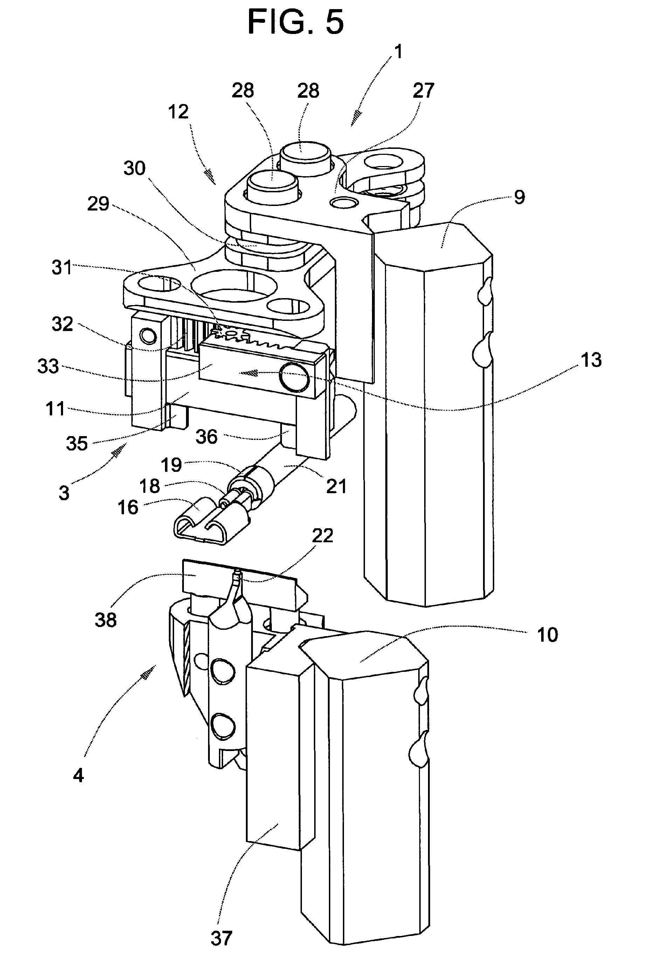

Fig. 5 zeigt Einzelheiten des Oberteils 3 und des Unterteils 4 des Messkopfes 1. Eine am ersten Ausleger 9 angeordnete erste Halteplatte 27 trägt die auf dem Piezo Prinzip arbeitende Kraftmesseinrichtung 12, wobei erste Schrauben 28 eine zweite Halteplatte 29 halten und die Piezoelemente 30 der Kraftmesseinrichtung 12 vorspannen.

Die an der zweiten Halteplatte 29 angeordnete Zentriereinrichtung 13 besteht aus dem an der zweiten Halteplatte 29 angeordneten zweiten Motor 14, der ein zweites Ritzel 31 antreibt. Das zweite Ritzel 31 wirkt auf eine erste Zahnstange 32 und auf eine zweite Zahnstange 33, die mittels einer Linearführung geführt sind, und bewegt die Zahnstangen 32,33 gegenläufig. An der ersten Zahnstange 31 ist eine erste Zentrierplatte 35 und an der zweiten Zahnstange ist eine zweite Zentrierplatte 36 angeordnet. Beim Zusammenfahren der Zentrierplatten 35,36 wird der Leitercrimp 18 horizontal zentriert.

Der Unterteil 4 besteht im wesentlichen aus einer dritten Halteplatte 37, der Spitze 22 und einer zweiten Schneide 38. Die am zweiten Ausleger 10 angeordnete dritte Halteplatte 37 trägt die Spitze 22 und die zweite Schneide 38. Die zweite Schneide 38 ist mit einem Antrieb, beispielsweise ein pneumatisch wirkender Aktuator, versehen, mittels dem die zweite Schneide 38 in vertikaler Richtung relativ zur Spitze 22 bewegbar ist. In ausgefahrener Position überragt die zweite Schneide 38 die Spitze 22, eingefahren überragt die Spitze 22 die zweite Schneide 38. Zweite Schneide 38 und Spitze 22 weisen zusammen etwa dieselbe Breite auf wie die erste Schneide 11.

Der Crimpkontakt 16 und somit auch der Leitercrimp 18 kann in Folge Materialverformung beim Crimpen um die Kabellängsachse leicht verdreht sein. Beim Zusammenfahren des Oberteils 3 und des Unterteils 4 wird die Verdrehung mittels der beiden Schneiden 11,38 korrigiert.

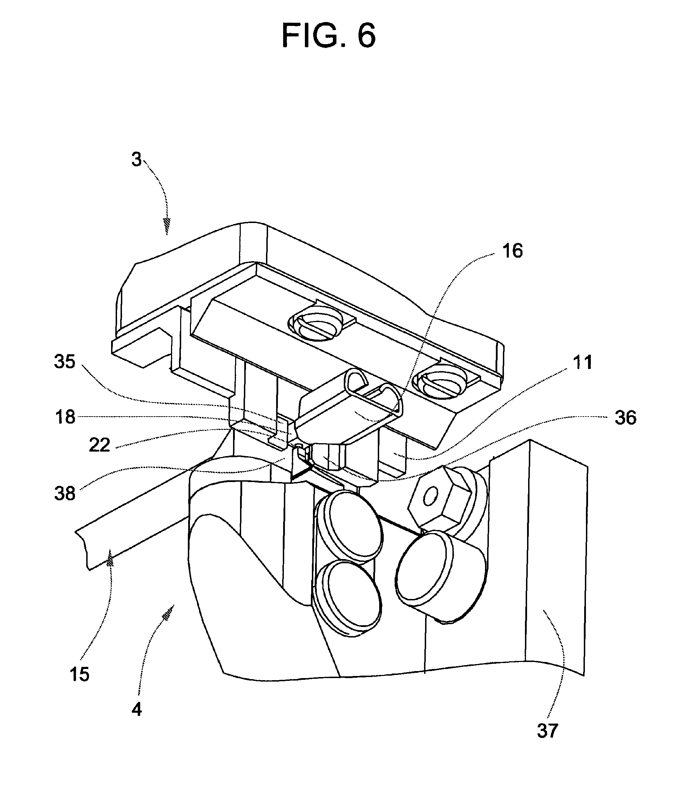

Fig. 6 zeigt den Messkopf 1 in der Messstellung, wobei die Spitze 22 die zweite Schneide 38 leicht überragt und auf die Unterseite beim dritten Punkt 25 des Leitercrimps 18 drückt. Die erste Schneide 11 drückt beim ersten Punkt 23 und beim zweiten Punkt 24 auf die Oberseite des Leitercrimps 18. Zuvor ist der Leitercrimp 18 mittels der ersten Zentrierplatte 35 und mittels der zweiten Zentrierplatte 36 horizontal zentriert und mittels der beiden Schneiden 11,38 verdrehkorrigiert bzw. lagekorrigiert worden.

Falls der Crimpkontakt 16 um die Kabellängsachse 180° gedreht ist, kann die erste Schneide 11, die Kraftmesseinrichtung 12 und die Zentriereinrichtung 13 auch am Unterteil 4 bzw. am zweiten Teil 4 angeordnet sein und die zweite Schneide 38 und die Spitze 22 am Oberteil 3 bzw. am ersten Teil 3 angeordnet sein.

Der Crimphöhenmessung vorausgehend wird der Messkopf 1 bzw. die Crimphöhe CH auf Null eingestellt. Dabei wird die Spitze 22 und die erste Schneide 11 gegeneinander bewegt, bis die Spitze 22 flächig auf die erste Schneide 11 trifft und die mittels der Kraftmesseinrichtung 12 gemessene, gewünschte Kraft erreicht ist (über den Motorstrom des ersten Motors 5 wählbar). Die gemessene Kraft wird als Kalibrationskraft abgespeichert. Die Position der Ausleger 3,4 wird mittels der Linearmesseinrichtung ermittelt und daraus Crimphöhe CH Null bestimmt. Danach wird der Messkopf 1 geöffnet.

Die Crimphöhenmessung wird nach folgenden Schritten durchgeführt:
a) Greifer 17 bringt das crimpkontaktbestückte Kabel 15 auf die gewünschte Messposition. (Greifer kann Kabel 15 auch auf-/abbewegen).
b) Zweite Schneide 38 ausfahren (Schneide überragt Spitze).
c) Messkopf 1 schliessen bis eine Kraft mittels der Kraftmesseinrichtung 12 messbar ist.
d) Öffnen des Messkopfes 1 bis Kraft auf Null absinkt. Der Crimpkontakt 16 und somit der Leitercrimp 18 ist verdrehkorrigiert und in vertikaler Richtung vorbereitet. Vorteilhafterweise wird der Greifer 17 deaktiviert (luftlos), wobei sich das Kabel im Greifer 17 ergeben kann.
e) Erste Zentrieplatte 35 und zweite Zentrierplatte 36 zusammenfahren, bis der Strom des zweiten Motors 14 merklich ansteigt. Der Crimpkontakt 16 und somit der Leitercrimp 18 ist in horizontaler Richtung vorbereitet. Mittels der Position der Zentrierplatten 35,36 kann auch die Breite des Leitercrimps 18 (mittels Positionsgeber des zweiten Motors 14) bestimmt werden.
f) Erste Zentrieplatte 35 und zweite Zentrierplatte 36 leicht öffnen. (Messbar über Stromabsenkung im zweiten Motor 14).
g) Zweite Schneide 38 deaktivieren (luftlos) oder aktiv einfahren (Spitze 22 überragt beim weiteren Zusammenfahren des Messkopfes 1 die zweite Schneide 38).
h) Messkopf 1 mittels erstem Motor 5 schliessen bis Kalibrationskraft erreicht ist.
i) Position der Ausleger 3,4 mittels Linearmesseinrichtung ermitteln und daraus Crimphöhe CH bestimmen.
k) Messkopf 1 in Ausgangslage bringen und crimpkontaktbestücktes Kabel 15 mittels Greifer 17 ausfahren.

Die Crimphöhenmessung kann am gleichen Leitercrimp 18 in Kabellängsachse leicht versetzt an mehreren Stellen erfolgen. Zur Ermittlung des Minimums der Crimphöhe CH kann der Greifer 17 das Kabel 15 während der Messung leicht aufund abbewegen, wobei sich der Leitercrimp 18 mit Drehachse längs der Kante der ersten Schneide 11 vertikal leicht dreht.

## Patentansprüche

1. Messkopf (1) bestehend aus einem ersten Teil (3) und aus einem zweiten Teil (4) und bestehend aus einem die Teile (3,4) antreibenden ersten Antrieb (2), wobei der erste Teil (3) und der zweite Teil (4) zur Bestimmung der Crimphöhe (CH) eines Leitercrimps (18) gegenläufig linear bewegbar sind, wobei am ersten Teil (3) eine erste Schneide (11) und am zweiten Teil (4) eine Spitze (22) angeordnet ist, wobei bei der Bestimmung der Crimphöhe (CH) die erste Schneide (11) die Oberseite des Leitercrimps (18) an zwei Punkten (23,24) abtastet und die Spitze (22) die Unterseite des Leitercrimps (18) an einem Punkt (25) abtastet,
**dadurch gekennzeichnet,**
**dass** am zweiten Teil (3,4) eine relativ zur Spitze (22) bewegbare einstückige zweite Schneide (38) vorgesehen ist, die zusammen mit der ersten Schneide (11) der Lagekorrektur des Leitercrimps (18) dient.

2. Messkopf nach Anspruch 1,
**dadurch gekennzeichnet,**
**dass** am ersten Teil (3) eine Kraftmesseinrichtung (12) angeordnet ist, wobei mit einer linearen Zustellbewegung des ersten Teils (3) und des zweiten Teils (4) ein zwischen der ersten Schneide (11) und der Spitze (22) angeordneter Leitercrimp (18) in der Kraftmesseinrichtung (12) einen Kraftanstieg erzeugt.

3. Messkopf nach Anspruch 2,
**dadurch gekennzeichnet,**
**dass** mit dem Kraftsignal der Kraftmesseinrichtung (12) und mit einem Positionssignal einer die Lage des ersten Teils (3) bzw. des zweiten Teils (4) erfassenden Linearmesseinrichtung die Crimphöhe (CH) des Leitercrimps (18) bestimmbar ist.

4. Messkopf nach einem der vorhergehenden Ansprüche,
**dadurch gekennzeichnet,**
**dass** am ersten Teil (3) eine Zentriereinrichtung (13) vorgesehen ist, die den Leitercrimp (18) in horizontaler Richtung zentriert.

5. Messkopf nach Anspruch 4,
**dadurch gekennzeichnet,**
**dass** die Zentriereinrichtung (13) zwei mittels eines zweiten Ritzels (31) gegenläufig bewegbare Zahnstangen (32, 33) aufweist, wobei an der ersten Zahnstange (32) eine erste Zentrierplatte (35) und an der zweiten Zahnstange (33) eine zweite Zentrierplatte (36) vorgesehen ist, wobei mit der gegenläufigen Bewegung der Zentrierplatten (35,36) der Leitercrimp (18) zentrierbar ist.

6. Verfahren zur Bestimmung der Crimphöhe (CH) eines Leitercrimps (18) nach folgenden Schritten:
a) eine Spitze (22) und eine erste Schneide (11) eines Messkopfes (1) mittels eines ersten Motors (5) gegeneinander bewegen, bis eine Kalibrationskraft mittels einer Kraftmesseinrichtung (12) messbar ist, Kalibrationskraft und Position der Spitze (22) und der ersten Schneide (11) als Crimphöhe (CH) Null abspeichern.
b) Kabel (15) mit Crimpkontakt (16) mittels Greifer (17) auf die gewünschte Messposition bringen.
c) eine einstückige zweite Schneide (38) ausfahren.
d) Messkopf (1) mit der ersten Schneide (11) und der zweiten Schneide (38) schliessen bis eine Kraft mittels der Kraftmesseinrichtung (12) messbar ist.
e) öffnen des Messkopfes (1) bis Kraft auf Null absinkt. Der Crimpkontakt (16) und somit ein Leitercrimp (18) ist verdrehkorrigiert und in vertikaler Richtung vorbereitet.
f) erste Zentrierplatte (35) und zweite Zentrierplatte (36) einer Zentriereinrichtung (13) zusammenfahren, bis der Strom eines zweiten Motors (14) der Zentriereinrichtung (13) merklich ansteigt. Der Crimpkontakt (16) und somit der Leitercrimp (18) ist in horizontaler Richtung vorbereitet.
g) erste Zentrierplatte (35) und zweite Zentrierplatte (36) leicht öffnen und Stromabsenkung im zweiten Motor (14) messen.
h) zweite Schneide (38) deaktivieren oder aktiv einfahren. (Spitze (22) überragt beim weiteren Zusammenfahren des Messkopfes (1) die zweite Schneide (38)).
i) Messkopf (1) mittels erstem Motor (5) schliessen bis Kalibrationskraft erreicht ist.
k) Position der Spitze (22) und der ersten Schneide (11) ermitteln und daraus Crimphöhe (CH) bestimmen und
l) Messkopf (1) in Ausgangslage bringen und crimpkontaktbestücktes Kabel (15) mittels Greifer (17) ausfahren.

## Claims

1. Measuring head (1) consisting of a first part (3) and of a second part (4) and consisting of a first drive (2) that drives the parts (3, 4), wherein, for the purpose of determining the crimp height (CH) of a conductor crimp (18), the first part (3) and the second part (4) are linearly movable in mutually opposite directions, and wherein arranged on the first part (3) is a first knife-edge (11), and on the second part (4) a point (22), and wherein, when determining the crimp height (CH), the first knife-edge (11) touches the topside of the conductor crimp (18) at two points (23, 24), and the point (22) touches the underside of the conductor crimp (18) at one point (25),
**characterized in that**
provided on the second part (3, 4) is a single-piece second knife-edge (38) that is movable relative to the point (22), which, together with the first knife-edge (11), serves to correct the position of the conductor crimp (18).

2. Measuring head according to Claim 1,
**characterized in that**
arranged on the first part (3) is a force-measuring device (12), wherein with a linear advancing movement of the first part (3) and of the second part (4), a conductor crimp (18) that is arranged between the first knife-edge (11) and the point (22) causes an increases in force in the force-measuring device (12).

3. Measuring head according to Claim 2,
**characterized in that**
by means of the force signal of the force-measuring device (12), and with a position signal of a linear measuring device that registers the position of the first part (3) and of the second part (4) respectively, the crimp height (CH) of the conductor crimp (18) can be determined.

4. Measuring head according to one of the foregoing claims,
**characterized in that**
provided on the first part (3) is a centering device (13) that centers the conductor crimp (18) in horizontal direction.

5. Measuring head according to Claim 4,
**characterized in that**
the centering device (13) has two toothed racks (32, 33) which, by means of a second pinion (31), are movable in mutually opposite directions, there being provided on the first toothed rack (32) a first centering plate (35), and on the second toothed rack (33) a second centering plate (36), the conductor crimp (18) being centerable by means of the mutually opposite movement of the centering plates (35, 36).

6. Method for determining the crimp height (CH) of a conductor crimp (18) in the following steps:
a)
By means of a first motor (5), a point (22) and a first knife-edge (11) of a measuring head (1) are moved towards each other until a calibration force is measurable by means of a force-measuring device (12), calibration force and position of the point (22) and of the first knife-edge (11) being saved as crimp-height (CH) zero.
b)
By means of gripper (17), the cable (15) with crimp contact (16) is brought into the desired measuring position.
c)
A single-piece second knife-edge (38) is extended.
d)
The measuring head (1), with first knife-edge (11) and second knife-edge (38), is closed until a force is measurable by means of the force-measuring device (12).
e)
The measuring head (1) is opened until the force falls to zero. The crimp contact (16), and thus a conductor crimp (18), is twist-corrected and readied in vertical direction.
f)
A first centering plate (35) and a second centering plate (36) of a centering device (13) are moved together until the current of a second motor (14) of the centering device (13) rises markedly. The crimp contact (16), and thus the conductor crimp (18), is readied in horizontal direction.
g)
The first centering plate (35) and second centering plate (36) are slightly opened, and the reduction in current in the second motor (14) is measured.
h)
The second knife-edge (38) is deactivated, or actively retracted. (On further movement together of the measuring head (1), the point (22) extends beyond the second knife-edge (38)).
i)
By means of first motor (5), measurement head (1) is closed until the calibration force is attained.
k)
The position of the point (22) and of the first knife-edge (11) is determined, and the crimp height (CH) determined therefrom.
l)
The measuring head (1) is brought into the starting position, and the cable (15) with crimped-on crimp contact is withdrawn by means of the gripper (17).

## Revendications

1. Tête de mesure (1) composée d'une première partie (3) et d'une seconde partie (4) et composée d'un premier entraînement (2) qui entraîne les parties (3, 4), étant précisé que la première partie (3) et la seconde partie (4) sont mobiles linéairement, en sens inverse, pour définir la hauteur de sertissage (CH) d'un élément de sertissage de conducteur (18), qu'une première lame (11) est disposée sur la première partie (3) tandis qu'une pointe (22) est disposée sur la seconde partie (4), et que lors de la définition de la hauteur de sertissage (CH), la première lame (11) balaie le côté supérieur de l'élément de sertissage (18) au niveau de deux points (23, 24) alors que la pointe (22) balaie le côté inférieur de l'élément de sertissage (18) au niveau d'un point (25),
**caractérisée en ce qu'**il est prévu sur la seconde partie (3, 4) une seconde lame (38), d'une seule pièce, qui est mobile par rapport à la pointe (22) et qui sert avec la première lame (11) à corriger la position de l'élément de sertissage (18).

2. Tête de mesure selon la revendication 1, **caractérisée en ce qu'**il est prévu sur la première partie (3) un dynamomètre (12), étant précisé qu'avec un mouvement d'approche linéaire de la première partie (3) et de la seconde partie (4), un élément de sertissage de conducteur (18) disposé entre le première lame (11) et la pointe (22) produit dans le dynamomètre (12) une augmentation de force.

3. Tête de mesure selon la revendication 2, **caractérisée en ce que** grâce au signal de force du dynamomètre (12) et à un signal de position d'un dispositif de mesure linéaire qui détecte la position de la première partie et de la seconde partie (4), la hauteur de sertissage (CH) de l'élément de sertissage (18) peut être définie.

4. Tête de mesure selon l'une des revendications précédentes, **caractérisée en ce qu'**il est prévu sur la première partie (3) un dispositif de centrage (13) qui centre l'élément de sertissage (18) dans le sens horizontal.

5. Tête de mesure selon la revendication 4, **caractérisée en ce que** le dispositif de centrage (13) comporte deux crémaillères (32, 33) qui sont mobiles en sens inverse grâce à un second pignon (31), étant précisé qu'une première plaque de centrage (35) est prévue sur la première crémaillère (32), et une seconde plaque de centrage (36) sur la seconde crémaillère (33), et que grâce au mouvement inverse des plaques de centrage (35, 36) l'élément de sertissage (18) peut être centré.

6. Procédé pour définir la hauteur de sertissage (CH) d'un élément de sertissage de conducteur (18) selon les phases suivantes :
a) déplacer l'une vers l'autre une pointe (22) et une première lame (11) d'une tête de mesure (1) à l'aide d'un premier moteur (5) jusqu'à ce qu'une force de calibrage puisse être mesurée à l'aide d'un dynamomètre (12), mémoriser la force de calibrage et la position de la pointe (22) et de la première lame (11) comme hauteur de sertissage (CH) zéro,
b) amener dans la position de mesure voulue le câble (15) avec le contact de sertissage (16) à l'aide d'un organe de préhension (17),
c) déployer une seconde lame d'une seule pièce (38),
d) fermer la tête de mesure (1) avec la première lame (11) et la seconde lame (38) jusqu'à ce qu'une force puisse être mesurée à l'aide du dynamomètre (12),
e) ouvrir la tête de mesure (1) jusqu'à ce que la force baisse jusqu'à zéro. La rotation du contact de sertissage (16) et, ainsi, d'un élément de sertissage (18) est corrigée et ledit contact (16) et ledit élément (18) sont préparés dans le sens vertical,
f) rapprocher la première plaque de centrage (35) et la seconde plaque de centrage (36) d'un dispositif de centrage (13) jusqu'à ce que le courant d'un second moteur (14) de celui-ci augmente sensiblement. Le contact de sertissage (16) et, ainsi, l'élément de sertissage de conducteur (18) sont préparés dans le sens horizontal,
g) ouvrir légèrement la première plaque de centrage (35) et la seconde plaque de centrage (36) et mesurer la baisse de courant dans le second moteur (14),
h) désactiver la seconde lame (38) ou la rentrer activement. (La pointe (22) dépasse de la seconde lame (38) lors de la poursuite du rapprochement de la tête de mesure (1)),
i) fermer la tête de mesure (1) à l'aide du premier moteur (5) jusqu'à ce que la force de calibrage soit atteinte,
k) rechercher la position de la pointe (22) et de la première lame (11) et définir à partir de là la hauteur de sertissage (CH), et
l) amener la tête de mesure (1) dans la position de départ et sortir à l'aide de l'organe de préhension (17) le câble (15) garni avec le contact de sertissage.
